# EUROPEAN PATENT SPECIFICATION

(11) **EP 1 491 436 B1**
(45) Date of publication and mention of the grant of the patent: **27.06.2007**
(21) Application number: 04012594.0
(22) Date of filing: 27.05.2004
(51) Int. Cl.: B62K 21/08

(54) **Steering damper device for two-wheeled vehicle**
Lenkungsdämpfer für ein Zweiradfahrzeug
Amortisseur de direction pour véhicules du type à selle

(30) Priority: 25.06.2003 JP 2003181634; 26.04.2004 JP 2004130084
(43) Date of publication of application: 29.12.2004
(73) Proprietor: HONDA MOTOR CO., Ltd., Tokyo (JP)
(72) Inventor: Sato, Shin, Wako-shi Saitama (JP); Kanaumi, Shogo, Wako-shi Saitama (JP); Wakamatsu, Kuniaki, Wako-shi Saitama (JP); Toyoda, Hidetoshi, Wako-shi Saitama (JP)
(74) Representative: Rupp, Christian

(56) References cited:
- EP-A- 1 298 049
- BE-A- 459 825
- DE-C- 447 231
- US-A- 5 492 033

## Description

The present invention relates to a two-wheeled vehicle having a steering damper device according to the features of the preamble of claim 1. Such a vehicle is known from US 5,492,033.

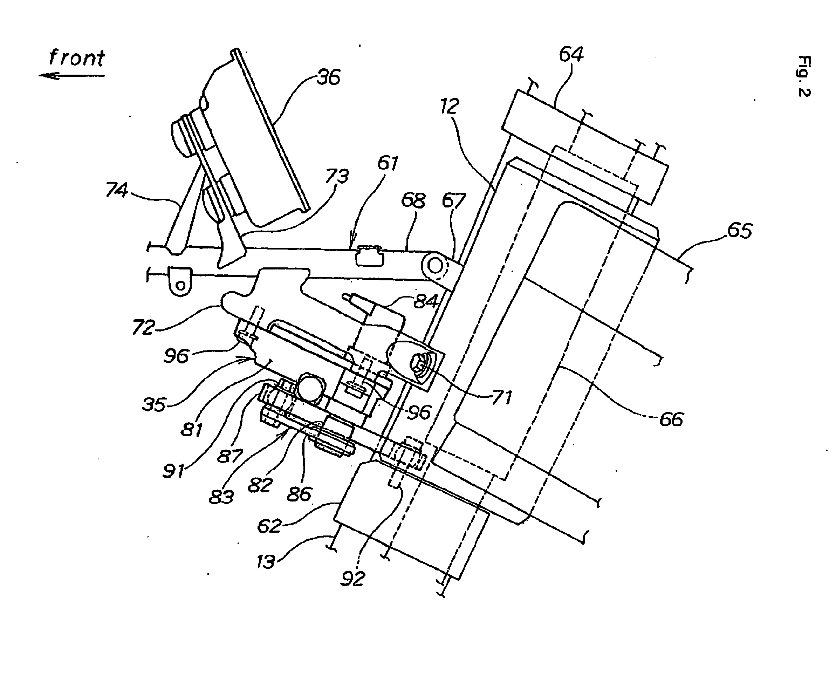

Another example of a two-wheeled vehicle, where a steering damper device is arranged above a head pipe provided at the front end of a body frame is disclosed in Japanese Patent Laid-Open No. 2002-284077 (Page 3-4, Fig. 2).

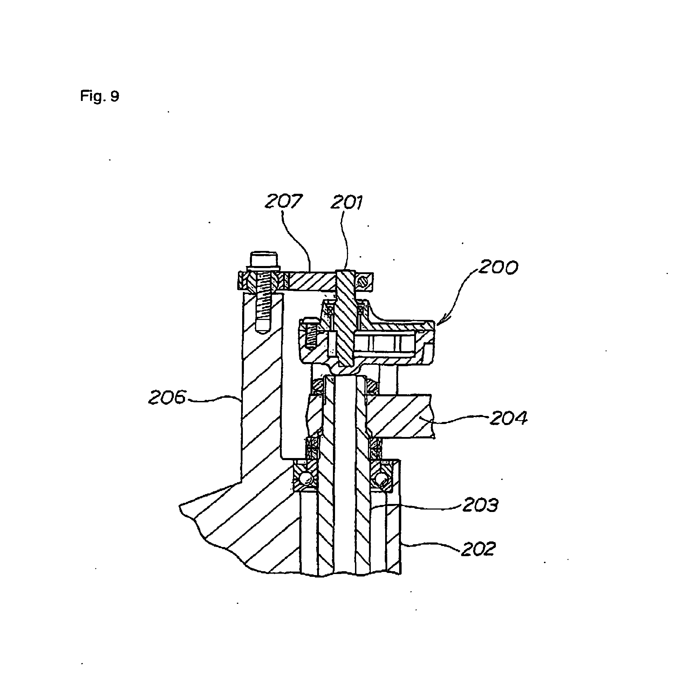

Fig. 2 of said prior art document will be described with reference to the following Fig. 9. In this respect, reference numerals have been re-designated.

Fig. 9 is a sectional view showing a conventional steering damper device for a two-wheeled vehicle, and a steering damper 200 is a device in which a rotating shaft 201 thereof is arranged above a headpipe 202 and a steering shaft 203 rotatively installed to this head pipe 202 and which is fixed on the upper surface of an upper bracket 204 for supporting an upper portion of the front fork. The above-described rotating shaft 201 is installed to a radial arm 207 fixed to a body-side frame 206.

Patent document US 5,492,033 relates to a steering damper in and for vehicles, particularly for mountain bicycles. The steering damper is mounted in extension to the steering shaft of the front fork, and the opposite end of the steering damper is fixed to the top tube of the bicycle frame. Alternatively, the steering damper is fixed to the head pipe on a front end thereof and below the gooseneck of the bicycle.

Patent document BE 459 825 A relates to a mechanism for the stabilization of a front wheel of a bicycle or a motorcycle. A spring is attached to the head pipe and the front fork of the vehicle, such that the spring is stretched when the handlebar turns the front wheel, and the spring brings the front wheel back to neutral position due to the applied spring force, subsequently.

### Problems to be solved by the invention

In a two-wheeled vehicle provided with a meter forward of the head pipe 202, when there is arranged the steering damper 200 above the head pipe 202, the meter is obstructed by the steering damper 200. Thus, it is conceivable that the meter is moved to a different place, but a more legible place for the meter is limited, it becomes difficult to secure viewability of the meter and degrees of freedom of the meter in layout becomes less.

Also, since the steering damper 200 is located at a high position in the two-wheeled vehicle, a center of gravity of the vehicle becomes higher in a light-weight vehicle and it is not desirable.

Further, on the upper surface of the upper bracket 204, space for installing the steering damper 200 becomes smaller because a handlebar and switches are installed, and shape and size of the meter for allowing it to be installed are limited.

Thus, it is an object of the present invention to facilitate securing viewability of the meter and to increase degrees of freedom of the meter in layout by improving a steering damper device for a two-wheeled vehicle, and to make effective use of space in the vehicle and to further increase degrees of freedom of the meter in design by making the center of gravity of the vehicle lower.

Said object is achieved by means of the features of the independent claim. The dependent claims develop further the central idea of the present invention.

According to Claim 1 of the invention, there is provided a two-wheeled vehicle in which at a front end of a main frame, there is installed a head pipe for rotatively supporting a steering shaft; at the front part of this head pipe, there is installed a meter stay for supporting a meter; and between the head pipe side and the steering shaft side, there is interposed a steering damper device for restricting abrupt run-out of the handlebar, characterized in that the steering damper device is arranged forward of the head pipe and below the meter stay.

The steering damper device is arranged forward of the head pipe and below the meter stay, whereby it is possible to easily secure viewability of the meter without being obstructed by the steering damper device, and yet to increase degrees of freedom of the meter in layout.

Also, it is possible to make the center of gravity of the vehicle lower by arranging the steering damper device in a lower place than in a conventional case. Further, it is possible to make effective use of dead space forward of the head pipe and below the meter stay, and yet the space can be secured comparatively large. Therefore, it is possible to increase degrees of freedom of the meter in design such as shape and size.

According to Claim 1 of the invention, the steering damper device is supported by a meter stay.

A supporting member of the steering damper device is used in common with the meter stay for supporting the meter, whereby it is possible to reduce a number of components, and to reduce the cost and weight.

According to Claim 2 of the invention, there is provided a steering damper device, which is equipped with a steering angle sensor for detecting a steering angle of a handlebar, and this steering angle sensor is arranged at a hole portion provided at the meter stay.

It is possible to protect the steering angle sensor by the meter stay, and to enhance reliability of the steering damper device. Also, it is possible to reduce the number of components without the need for any special protection member for protecting the steering angle sensor.

According to Claim 3 of the invention, there is provided a steering damper device, which is installed to the steering shaft and which is coupled to a bottom bridge for supporting the front fork via a link mechanism.

The steering damper device is coupled to the bottom bridge via the link mechanism, whereby if an input shaft of the steering damper device is coupled to the link mechanism, it will be possible to easily change a turning angle of the input shaft relative to an actual steering angle of the handlebar, and to enhance a degree of freedom of the steering damper device in design.

### Advantages of the Invention

According to Claim 1 of the invention, since the steering damper device is arranged forward of the head pipe and below the meter stay, it is possible to easily secure viewability of the meter without being obstructed by the steering damper device, and yet to increase a degree of freedom of the meter in layout.

Also, it is possible to make the center of gravity of the vehicle lower by arranging the steering damper device in a lower place than in a conventional case. Further, it is possible to make effective use of dead space forward of the head pipe and below the meter stay, and yet the space can be secured comparatively large. Therefore, it is possible to increase degrees of freedom of the meter in design such as shape and size.

Furthermore, since the steering damper device has been supported by the meter stay, the supporting member of the steering damper device is used in common with the meter stay for supporting the meter, whereby it is possible to reduce a number of components, and to reduce the cost and weight.

According to Claim 2 of the invention, since the steering damper device is equipped with a steering angle sensor for detecting a steering angle of a handlebar, and this steering angle sensor has been arranged at a hole portion provided at the meter stay, it is possible to protect the steering angle sensor by the meter stay, and to enhance reliability of the steering damper device. Also, it is possible to reduce the number of components without the need for any special protection member for protecting the steering angle sensor.

According to Claim 3 of the invention, since the steering damper device is installed to the steering shaft and is, via a link mechanism, coupled to a bottom bridge for supporting the front fork, if an input shaft of the steering damper device is coupled to the link mechanism, it will be possible to easily change a turning angle of the input shaft relative to an actual steering angle of the handlebar, and to enhance a degree of freedom of the steering damper device in design.

### Brief Description of the Drawings

Fig. 1 is a side view showing a two-wheeled vehicle equipped with a steering damper device according to the present invention;
Fig. 2 is a side view showing a principal part of a two-wheeled vehicle according to the present invention;
Fig. 3 is a plan view showing a principal part of a two-wheeled vehicle according to the present invention;
Fig. 4 is an explanatory view showing detailed structure and assembly procedure of the steering damper device according to the present invention;
Figs. 5 (a) and 5 (b) are working views showing the principle of the steering damper device according to the present invention;
Figs. 6(a) and 6(b) are working views showing an operation of the steering damper device according to the present invention;
Fig. 7 is a side view of a principal part showing a steering damper device (another embodiment) for a two-wheeled vehicle according to the present invention;
Fig. 8 is a view taken along the arrow 8 of Fig. 7; and
Fig. 9 is a sectional view showing a conventional steering damper device for a two-wheeled vehicle.

Hereinafter, an exemplary embodiment for carrying out the present invention will be made with reference to the accompanying drawings. In this respect, the drawing will be viewed in the direction of the symbol.

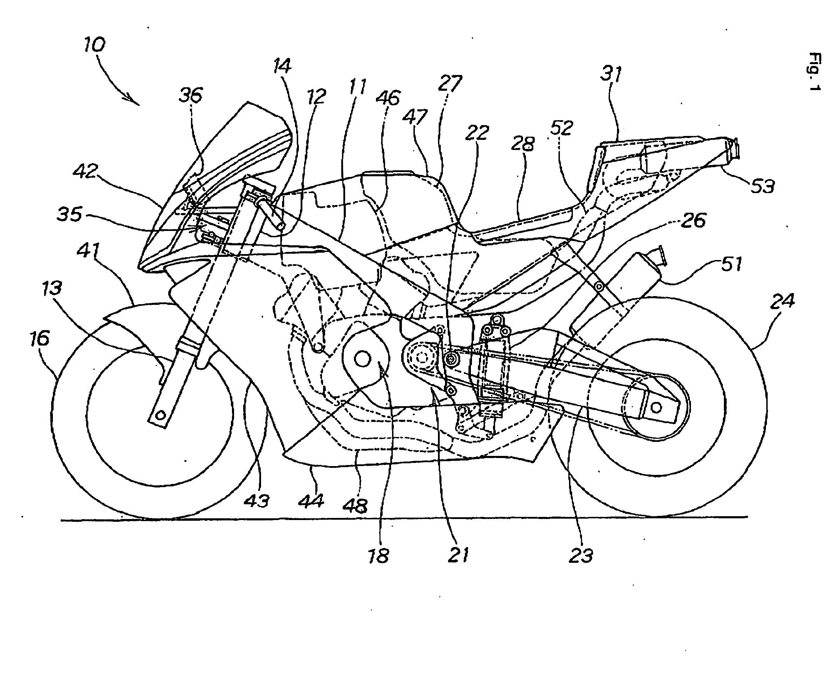

Fig. 1 is a side view showing a two-wheeled vehicle equipped with a steering damper device according to the present invention, and a motorcycle 10 as a two-wheeled vehicle is comprised of : a body frame 11; a front fork 13 and a handlebar 14 which are installed to a steering shaft (to be described in detail later) to be rotatively supported by a head pipe 12 provided at a front end of a body frame 11; a front wheel 16 installed to a lower end portion of the front fork 13; an engine 18 installed to a lower part of the body frame 11; a transmission 21 integrally installed to a rear part of the engine 18; a swing arm 23 installed to a pivot shaft 22 provided in a rear part of the body frame 11 in such a manner as to be freely swingable in the up-and-down direction; a rear wheel 24 installed to a rear end portion of the swing arm 23; a rear cushion unit 26 provided between the swing arm 23 and each of lower parts of rear part of the body frame 11; a fuel tank 27 installed to an upper part of the body frame 11; and a seat cowl 31 installed to an upper part of the body frame 11 in order to cover this fuel tank 27 and provide a seat 28.

The steering damper device 35 is arranged below the meter 36 provided forward of the head pipe 12, and is a device for preventing the handlebar from abruptly swinging, for example, when an external force is exerted on the front wheel 16 from a road surface during running.

In this case, reference numeral 41 designates a front fender for covering the front wheel 16; 42, an upper cowl; 43, a middle cowl; 44, a lower cowl; 46, an intake air box; 47, an upper cover for covering the intake air box 46 and the fuel tank 27; 48, an exhaust pipe for extending from a front-side cylinder of the engine 18 toward the rear: 51, a muffler for connecting to the exhaust pipe 48; 52, an exhaust pipe for extending from a rear-side cylinder of the engine 18 toward the rear direction; and 53, a muffler connected to the exhaust pipe 52.

Fig. 2 is a side view (an arrow (front) in the figure represents the front part of the vehicle and so forth) showing a principal part of a two-wheeled vehicle according to the present invention, and shows that to the front part of the head pipe 12, there is installed a meter stay 61 for supporting a meter 36; and to this meter stay 61 and a bottom bridge 62 for coupling the left and right of a front fork 13, there is installed a steering damper device 35. In this respect, reference numeral 64 designates a top bridge for supporting the left and right of the front fork 13 together with the bottom bridge 62; 65, a main frame (a component part of the body frame 11) installed to the head pipe 12; and 66, a steering shaft which is rotatively supported by the head pipe 12, and both end portions of which are installed to the top bridge 64 and the bottom bridge 62 respectively.

The meter stay 61 is comprised of: an upper stay 68 installed to a protruded portion 67 installed to the head pipe 12; a lower stay 72 to be integrally installed to the lower portion of an intermediate portion of this upper stay 68 and installed to the head pipe 12 with bolts 71, 71 (only reference numeral 71 on this side is shown); a supporting plate 73 for directly supporting the meter 36 by extending obliquely upward forward from the upper stay 68; and a stiffener 74 for reinforcing this supporting plate 73.

The steering damper device 35 is comprised of: a steering damper body 81 for exhibiting a damper function; a link mechanism 83 for coupling an input shaft 82 provided in this steering damper proper 81 to the bottom bridge 62; the steering angle sensor 84 installed to the upper part of the steering damper body 81 in order to detect a turning angle of the input shaft 82; and a control device (not shown) for controlling a damper damping force of the steering damper body 81.

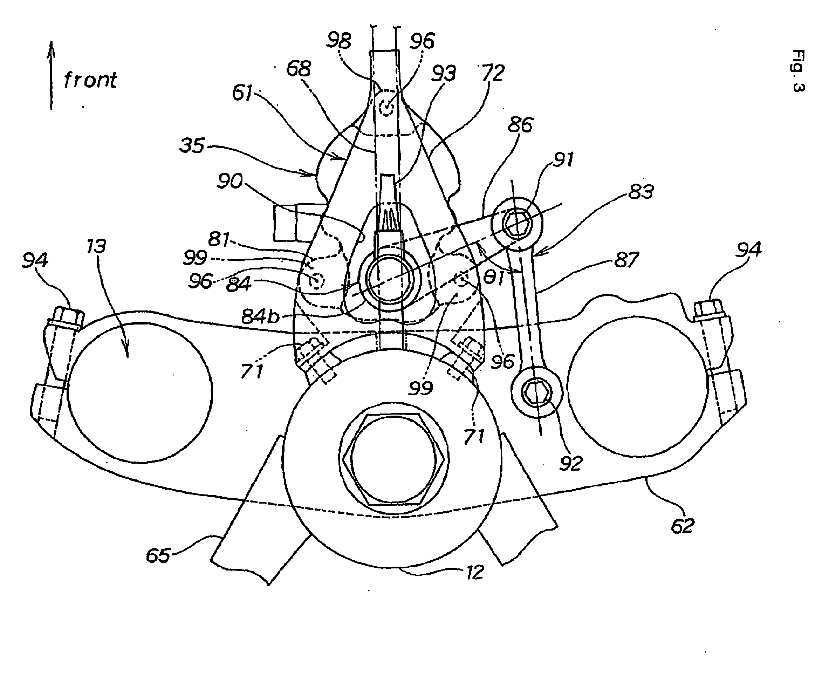

Fig. 3 is a plan view showing a principal part of a two-wheeled vehicle according to the present invention, and shows that to a head pipe 12, there is installed a meter stay 61 consisting of a rod-shaped upper stay 68 and a substantially triangular lower stay 72; to the lower part of the lower stay 72, there is installed a steering damper device 35, in detail, a steering damper body 81 and a steering angle sensor 84; and an input shaft 82 (See Fig. 2) of the steering damper body 81 and the bottom bridge 62 are coupled through a link mechanism 83.

The link mechanism 83 consists of a first link 86 installed to the input shaft 82 and a second link 87 installed to a tip end of this first link 86 and an upper surface of the bottom bridge 62 respectively in such a manner as to be freely swingable.

In this case, reference character θ1 designates a link angle between the first link 86 and the second link 87 when the front wheel 16 (See Fig. 1) is directed toward a direct advance direction; 90, a through-hole portion as a substantially triangular hole portion formed in the lower stay 72 in order to reduce the weight; 91, a bolt for coupling the first link 86 to the second link 87; 92, a bolt for coupling the second link 87 to the bottom bridge 62; 93, a harness for transmitting a steering angle signal from the steering angle sensor 84 to a control device; and 94, 94, bolts for fixing the front fork 13 to the bottom bridge 62.

Hereinafter, the description will be made of detailed structure of each component part of the steering damper device 35 described above and an assembly procedure of these component parts.

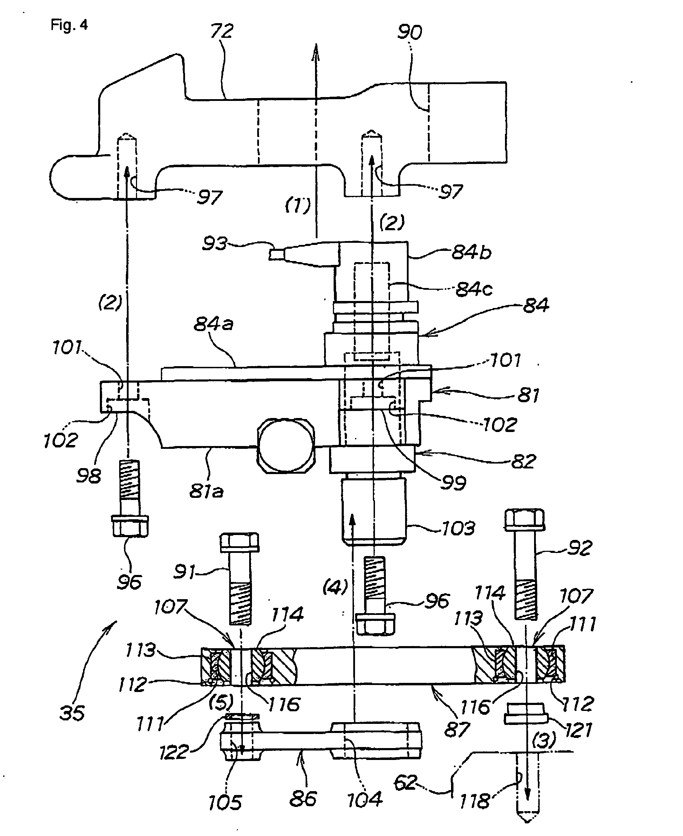

Fig. 4 is an explanatory view showing detailed structure and the assembly procedure of the steering damper device according to the present invention.

A lower stay 72 is a member formed with female thread portions 97... into which bolts 96... (... indicates a plurality of pieces and so forth) are to be screwed.

The steering damper body 81 is a member provided with: flange portions 98, 99, 99 (only reference numeral 99 on this side is shown) to be fastened tight with bolts 96...; bolt insertion holes 101... and spot facing portions 102..., provided on the flange portions 98, 99, 99 in order to pass the bolts 96... through, and is obtained by sealing oil within a case 81a made of magnesium or magnesium alloy. As described above, the case 81a of the steering damper body 81 is caused to be made of resin, whereby the steering damper body 81 can be made light-weight.

The steering angle sensor 84 is composed of: a flange portion 84a to be installed to the steering damper body 81; a sensor body 84b for protruding upward from this flange portion 84a; the above-described harness 93, and is obtained by coupling an end portion of the sensor shaft 84c rotatively provided within the sensor body 84b to the input shaft 82.

The first link 86 has a fitting hole 104 for fitting in a tip end portion 103 of the input shaft 82, and a female thread portion 105 into which the bolt 91 is screwed.

The second link 87 is a member provided with a spherical plain bearing 107 on a portion for coupling to each of the first link 86 and the bottom bridge 62.

The spherical plain bearing 107 is composed of: an outer race 113 which is fitted in an installation hole 111 formed on the second link 87 and is prevented from coming off with a ring 112; and an inner race 114 which is slidably fitted in this outer race 113, and a bolt 91 or a bolt 92 is passed through a through-hole 116 formed in the inner race 114.

The bottom bridge 62 has, on the upper surface, a female thread portion 118 for installing the second link 87. In this respect, reference numeral 121 designates an installation seat which becomes a seat when installing the second link 87 to the bottom bridge 62.

Next, the description will be made of the assembly procedure in order. In this respect, a parenthesized number shown in the figures corresponds to the following each parenthesized number.
(1) In a state in which the steering angle sensor 84 has been installed to the steering damper body 81, the upper portion of the steering angle sensor 84 is passed through a through-hole portion 90 in the lower stay 72.
(2) Bolts 96... are passed through bolt insertion holes 101... in the steering damper body 81, and are screwed into female thread portions 97... provided in the lower stay 72 whereby assemblies of the steering damper body 81 and the steering angle sensor 84 are installed to the lower stay 72.
(3) One end of the second link 87 is touched to the upper surface of the bottom bridge 62 via an installation seat 121; the bolt 92 is passed through a through-hole 116 in the spherical plain bearing 107 ; the bolt 92 is screwed into the female thread portion 118 of the bottom bridge 62, whereby the second link 87 is installed to the bottom bridge 62 in such a manner as to be freely horizontally rotatable and to be freely swingable in the up-and-down direction.
(4) A fitting hole 104 in the first link 86 is fitted into a tip end portion 103 in the input shaft 82,
(5) a bolt 91 is passed through a through-hole portion 116 in the spherical plain bearing 107, and the bolt 91 is screwed into the female thread portion 105 in the first link 86 via a washer 122, whereby the second link 87 is installed to the first link 86 in such a manner as to be freely horizontally rotatable and to be freely swingable in the up-and-down direction.

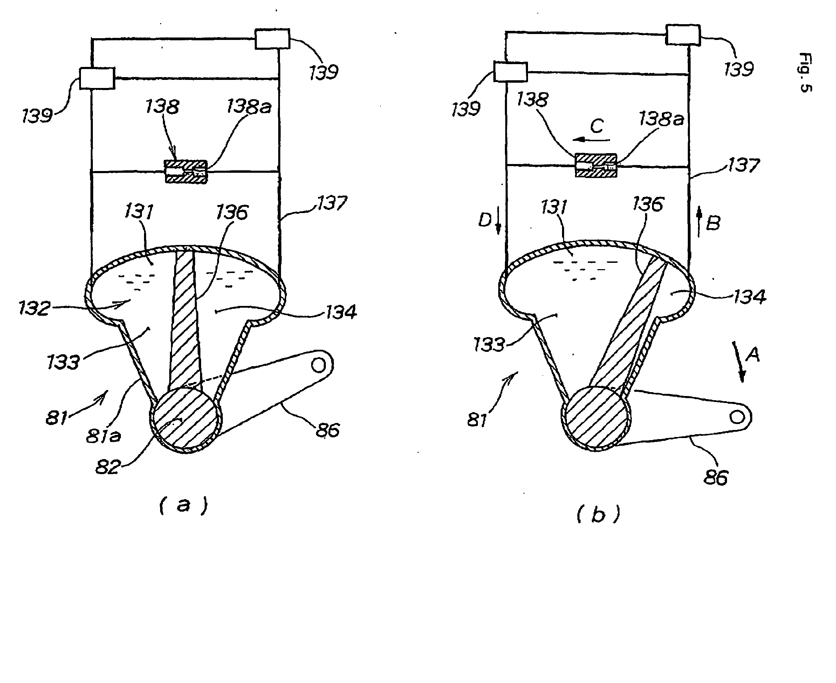

Figs. 5 (a) and 5 (b) are working views showing the principle of the steering damper device according to the present invention, and the principle of the operation will be simply explained.

In Fig. 5 (a), a steering damper body 81 has a liquid chamber 132 filled with oil 131 within the case 81a; the interior of this liquid chamber 132 is partitioned into a first chamber 133 and a second chamber 134; a movable partition wall 136 which swings within the liquid chamber 132 is installed to the input shaft 82; the first chamber 133 and the second chamber 134 are caused to communicate with each other through a communication path 137; and this communication path 137 is provided with an orifice formation member 138.

The orifice formation member 138 is a member in which there is provided an orifice 138a which reduces a path of oil passing through the interior has been provided.

In Fig. 5(b), when an external force is exerted on the front wheel from, for example, aroadsurface; a force for steering the front wheel to the right is transmitted to the first link 86 via the front fork, the bottom bridge, and the second link; and the first link 86 swings in a direction indicated by an arrow A, the movable partition wall 136 swings integrally with the first link 86; oil 131 within the second chamber 134 of the steering damper body 81 passes through a communication path 137, and within the orifice formation member 138, and reaches within the first chamber 133 as indicated by arrows B, C and D.

At this time, since the path for the oil 131 is reduced by the orifice 138a, resistance occurs in a flow of the oil 131 to swing the movable partition wall 136, and therefore, a high rotating force for rotating the input shaft becomes necessary. Accordingly, the steering operation is not affected.

In the above-described description of the principle of the steering damper device, there has been shown the orifice formation member 138 with the inner diameter of the orifice 138a fixed. In the present invention, however, the orifice diameter is made variable, for example, the orifice diameter is controlled by the control device on the basis of a steering angle obtained by detecting with the steering angle sensor, whereby a damping force of the steering damper device is adjusted. Also, so as not to generate more than a fixed damping force, there are installed relief valves 139... for bypassing the orifice formation member 138.

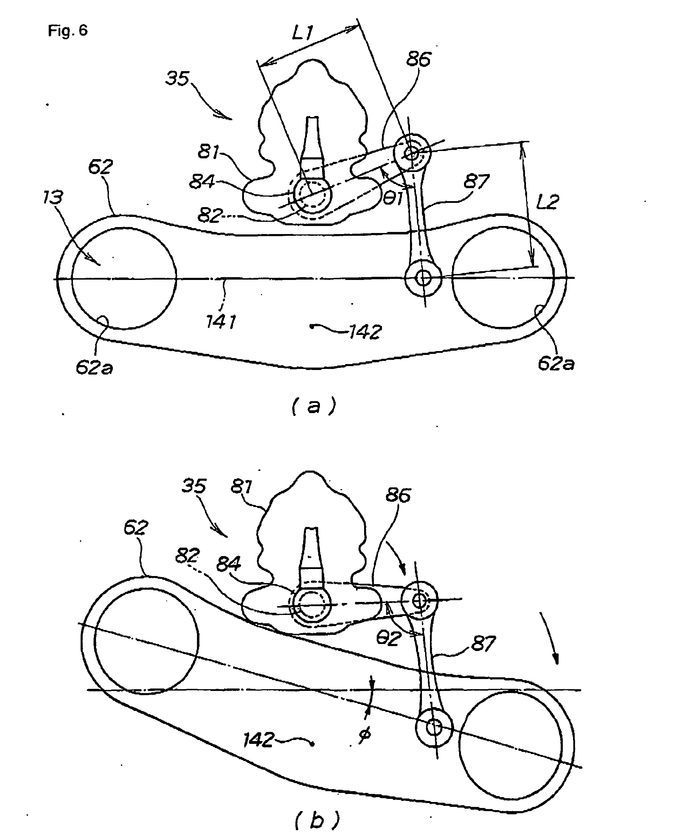

Figs. 6 (a) and 6 (b) are working views showing an operation of the steering damper device according to the present invention.

Fig. 6 (a) is a view showing a state before the steering damper device 35 operates.

At this time, the front wheel is in a state for facing forward of the vehicle, and a straight line 141 for connecting centers of hole portions 62a, 62a for installing the front fork of the bottom bridge 62 is in a direction perpendicular to the front part of the vehicle, that is, is in a state facing the widthwise direction of the two-wheeled vehicle.

Here, it is assumed that installation length of the first link 86 is L1 and installation length of the second link 87 is L2.

In Fig. 6 (b), when steering, for example, to the right, the bottom bridge 62 rotates by an angle φ (this angle φ is a steering angle of the handlebar) with a center of rotation 142 as a center in a clockwise direction from the state of Fig. 6(a) accordingly. Thereby, the second link 87 and the first link 86 swing and a link angle between the first link 86 and the second link 87 becomes θ2.

In Fig. 6 (a), if, by changing, for example, at least one of the installation length L1 of the first link 86 and the installation length L2 of the second link 87, or a position of an installation area of the second link 87 onto the bottom bridge 62, the link angle θ1 is set to 90°, a turning angle (or angular velocity of rotation of the input shaft 82 relative to angular velocity of rotation of the bottom bridge 62) of the input shaft 82 relative to a steering angle φ of the handlebar can be maximized, and if the link angle θ1 is set larger or smaller so as to become apart from 90° conversely, the a turning angle (or angular velocity of rotation of the input shaft 82 relative to angular velocity of rotation of the bottom bridge 62) of the input shaft 82 relative to a steering angle φ of the handlebar can be further made smaller.

Also, the above-described link angle is not limited to setting to 90° in the state of Fig. 6 (a), but can be set to 90° at a predetermined steering angle φ.

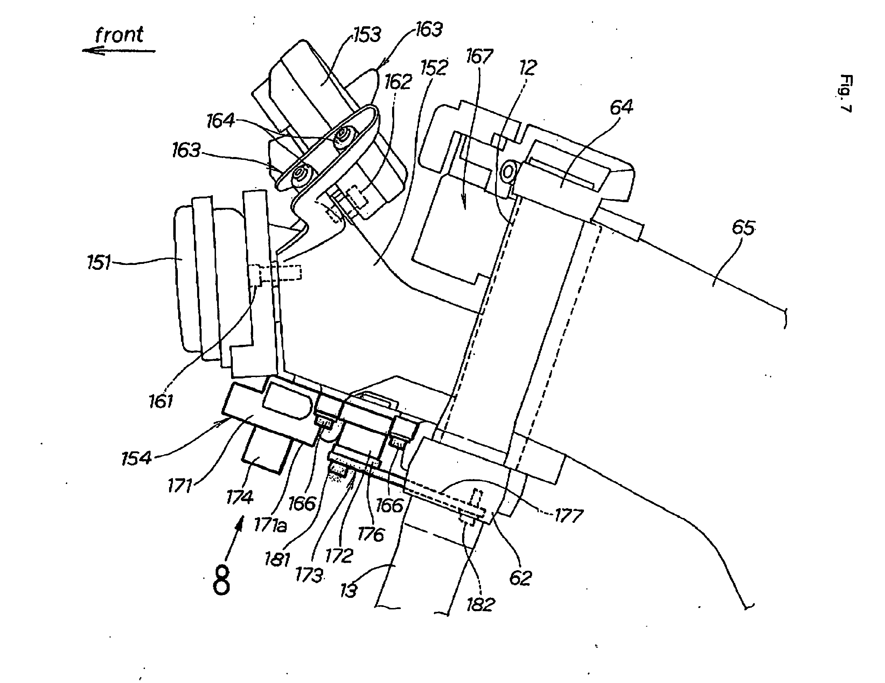

Fig. 7 is a side view of a principal part showing a steering damper device (another embodiment) for a two-wheeled vehicle according to the present invention, and shows that in the front part of the head pipe 12, there is installed a headlight stay 152 for supporting the headlight 151; a meter 153 and an upper cowl 42 (See Fig. 1) are also supported by this headlight stay 152; and between this headlight stay 152 and a bottom bridge 62 for coupling the left and right front forks 13, there is installed the steering damper device 154 (portions indicated by a thick line), that is, there is provided the steering damper device 154 below the headlight stay 152. (In this respect, parts identical to those in the embodiment shown in Figs. 2 and 3 are designated by the identical reference numerals and a detailed description thereof will be omitted.)

In Fig. 7, plural 161 (the figure shows only one piece) designates fixing bolts for fixing the headlight 151 to the headlight stay 152 ; plural 162 (the figure shows only one piece), fixing bolts for fixing the meter 153 to the headlight stay 152 ; 163 , 163, a pair of left and right cowl stay portions integrally provided on the headlight stay 152; 164, a cowl installation area provided on respective cowl stay portions 163 in order to install an upper cowl 42; plural 166 (the figure shows only one piece), fixing bolts for fixing the steering damper device 154 to the headlight stay 152; and 167, a main switch installed to a top bridge 64.

The steering damper device 154 is composed of: a steering damper body 171 for exhibiting a damper function; a linkmechanism 173 for coupling an input shaft 172 provided on this steering damper body 171 to a bottom bridge 62; a solenoid 174 installed on the underside 171a of the steering damper body 171; and a control device (not shown) for controlling a damper damping force of the steering damper body 171.

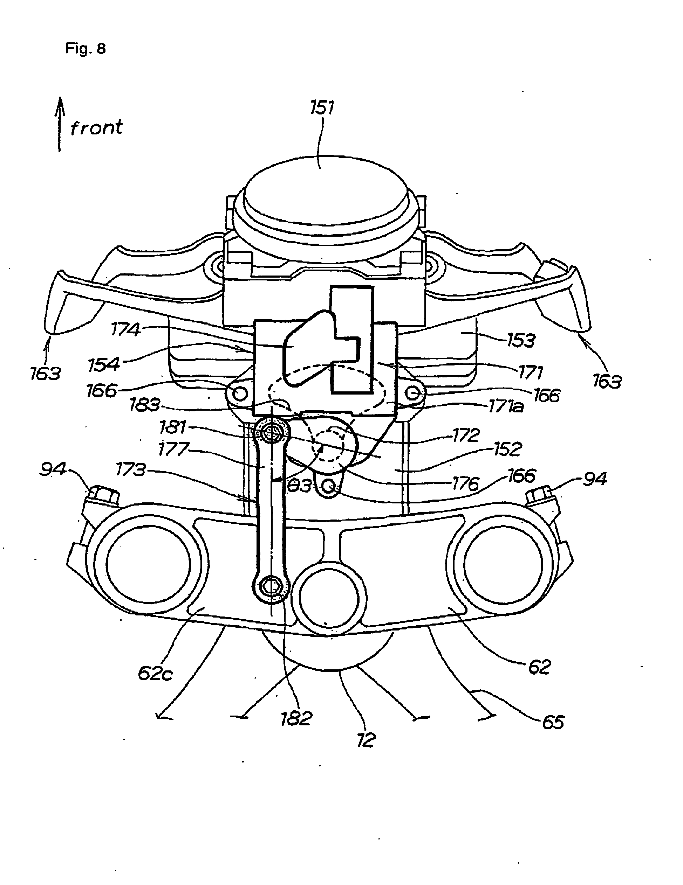

Fig. 8 is a view taken along the arrow 8 of Fig. 7, and shows that in the lower part of he headlight stay 152, the steering damper device 154 (portion indicated by a thick line), to be precise, the steering damper body 171 is installed, and the input shaft 172 of this steering damper body 171 has been coupled to the bottom bridge 62 through the link mechanism 173.

The link mechanism 173 is composed of: a first link 176 installed to the input shaft 172, and a second link 177 installed to the tip of this first link 176 and the underside 62c of the bottom bridge 62 in such a manner as to be freely swingable respectively.

In this case, reference numeral θ3 designates a link angle between the first link 176 and the second link 177 when the front wheel 16 (See Fig. 1) faces the direct advance direction; 181, a bolt for coupling the first link 176 to the second link 177; 182, a bolt for coupling the second link 177 to the bottom bridge 62; and 183, a liquid chamber (portion filled with oil) provided within a case 171a of the steering damper body 171. In this respect, the operating principles of the steering damper device 154 are the same as those of the steering damper device 35 shown in Fig. 5 and description thereof will be omitted.

As explained in Figs. 7 and 8, since the steering damper device 156 has been provided below the headlight stay 152, it is possible to easily secure viewability of the meter 153 without being obstructed by the steering damper device 154, and yet to increase degrees of freedom of the meter 153 in layout and in design.

Also, the steering damper device 154 is arranged lower than in the conventional case, whereby it is possible to bring down the center of gravity of the motorcycle 10 (See Fig. 2) and to improve the driving performance. Further, it is possible to make effective use of dead space forward of the head pipe 12 and below the headlight stay 152.

Further, since the headlight stay 152 is obtained by integrally molding, and serves also as both the meter stay and the cowl stay, it is possible to reduce a number of parts and reduce the cost and the weight.

Further, since the solenoid 174 has been installed on the underside 171a of the steering damper body 171 in a downward direction, it is possible to prevent interference with the headlight stay 152, and to install the steering damper device 154 in a small-sized/compact way.

Further, since the link mechanism 173 has been installed on the underside 62c of the bottom bridge 62, auxiliary parts and the like can be housed above the bottom bridge 62.

As described in Figs. 2 and 3, according to the first aspect of the present invention, there is provided a two-wheeled vehicle 10 (See Fig. 1) in which at a front end of a main frame 65, there is installed a head pipe 12 for rotatively supporting a steering shaft 66; at the front part of this head pipe 12, there is installed a meter stay 61 for supporting a meter 36; and between the head pipe 12 side and the steering shaft 66 side, there is interposed a steering damper device 35 for restricting abrupt run-out of the handlebar 14 (See Fig. 1), characterized in that the steering damper device 35 is arranged forward of the head pipe 12 and below the meter stay 61.

The steering damper device 35 is arranged forward of the head pipe 12 and below the meter stay 61, whereby as compared with the conventional steering damper device arranged above the head pipe, according to the present invention, it is possible to easily secure viewability of the meter 36 without being obstructed by the steering damper device 35, and yet to increase a degree of freedom of the meter 36 in layout.

Also, it is possible to make the center of gravity of the vehicle lower by arranging the steering damper device 35 in a lower place than in the conventional case for enhancing the running performance of the two-wheeled vehicle 10. Further, it is possible to make effective use of dead space forward of the head pipe 12 and below the meter stay 61, and yet the space can be secured comparatively large, and therefore, it is possible to in crease degrees of freedom of the meter 35 in shape, size and the like.

The second aspect of the present invention is characterized in that the steering damper device 35 is supported by a meter stay 61, in detail, a lower stay 72.

A supporting member of the steering damper device 35 is used in common with the meter stay 61 for supporting the meter 36, whereby it is possible to reduce a number of components, and to reduce the cost and weight.

The third aspect of the present invention is characterized in that the steering damper device 35 is equipped with a steering angle sensor 84 for detecting a steering angle φ of a handlebar 14, and this steering angle sensor 84 is arranged at a through- hole portion 90 provided at the meter stay 61.

It is possible to protect the steering angle sensor 84 by the meter stay 61, in details, to protect the sensor body 84b by enclosing the surroundings of the sensor body 84b of the steering angle sensor 84 with the lower stay 72 and covering the upper part of the sensor body 84b with the upper stay 68, for further enhancing reliability of the steering damper device. Also, it is possible to reduce the number of components without the need for any special protection member for protecting the steering angle sensor, and to reduce the cost and the weight.

The fourthaspect of the present invention is characterized in that the steering damper device 35 is installed to the steering shaft 66 and is coupled to a bottom bridge 62 for supporting the front fork 13 via a link mechanism 83.

The steering damper device 35 is coupled to the bottom bridge 62 via the link mechanism 83, whereby if an input shaft 82 of the steering damper device 35 is coupled to the link mechanism 83, it will be possible to easily change a turning angle of the input shaft 82 relative to an actual steering angle of the handlebar 14, and to enhance a degree of freedom of the steering damper device 35 in design.

In this respect, in the present invention, the steering damper device has been supported by the meter stay, but the present invention is not limited thereto, but it may be possible to support the steering damper body of the steering damper device and the steering angle sensor by the bottom bridge or the top bridge for coupling the input shaft to the meter stay or the head pipe via the link mechanism.

### [Description of the Reference Symbols]

10... Two-wheeled vehicle (Motorcycle),
12... Head pipe,
13... Front fork,
14... Handlebar,
35... Steering damper device,
36... Meter,
61... Meter stay,
62... Bottom bridge,
65... Main frame,
66... Steering shaft,
83... Link mechanism,
84... Steering angle sensor,
90... Hole portion (through-hole portion),
φ... Steering angle of handlebar.

## Claims

1. A two wheeled vehicle having a steering damper device (35), comprising:
a main frame (65),
a steering shaft (66),
a head pipe (12) for rotatively supporting the steering shaft (66) being installed at a front end of the main frame (65),
a handlebar (14),
and
between said head pipe (12) and said steering shaft (66), there is interposed the steering damper device (35) for restricting abrupt run-out of the handlebar (14),
**characterized in that** the two wheeled vehicle further comprises a meter (36), and a meter stay (61) installed in a front part of the head pipe (12) for supporting the meter (36) and **in that**
said steering damper device (35) is arranged forward of said head pipe (12) and below said meter stay (61), and that
said steering damper device (35) is supported by said meter stay (61).

2. The two-wheeled vehicle according to claim 1,
**characterized in that**
said steering damper device (35) is equipped with a steering angle sensor (84) for detecting a steering angle of said handlebar (14), and this steering angle sensor (84) is arranged at a hole portion (90) provided at said meter stay (61).

3. The two-wheeled vehicle according to claim 1 or 2,
**characterized in that**
said steering damper device (35) is installed to said steering shaft (66) and is coupled to a bottom bridge (62) for supporting the front (13) fork via a link mechanism (83).

## Patentansprüche

1. Zweirädriges Fahrzeug mit einer Lenkungsdämpfvorrichtung (35), umfassend: einen Hauptrahmen (65),
eine Lenkwelle (66)
ein Kopfrohr (12) zur drehbaren Lagerung der Lenkwelle (66), das am vorderen Ende des Hauptrahmens (65) montiert ist;
eine Lenkstange (14), und
wobei zwischen dem Kopfrohr (12) und der Lenkwelle (66) die Lenkungsdämpfvorrichtung (35) angeordnet ist, um einen abrupten Ausschlag der Lenkstange (14) zu begrenzen,
**dadurch gekennzeichnet, dass** das zweirädrige Fahrzeug ferner ein
Messinstrument (36), und
eine Messinstrumentstütze (61), die an einem vorderen Teil des Kopfrohrs (12) zur Halterung des Messinstruments (36) montiert ist, umfasst, und dass die Lenkungsdämpfvorrichtung (35) vor dem Kopfrohr (12) und unter der Messinstrumentstütze (61) angeordnet ist, und
dass die Lenkungsdämpfvorrichtung (35) durch die Messinstrumentstütze (61) gehalten wird.

2. Zweirädriges Fahrzeug gemäß Anspruch 1,
**dadurch gekennzeichnet, dass**
die Lenkungsdämpfvorrichtung (35) mit einem Lenkwinkelsensor (84) zur Bestimmung eines Lenkwinkels der Lenkstange (14) ausgestattet ist, und dass dieser Lenkwinkelsensor (84) an einem Lochbereich (90) angeordnet ist, der in der Messinstrumentstütze (61) vorgesehen ist.

3. Zweirädriges Fahrzeug gemäß Anspruch 1 oder 2,
**dadurch gekennzeichnet, dass**
die Lenkungsdämpfvorrichtung (35) an der Lenkwelle (66) montiert ist und mit einer Bodenbrücke (62) zur Halterung der Vorderradgabel (13) über einen Verbindungsmechanismus (83) gekoppelt ist.

## Revendications

1. Deux-roues ayant un dispositif amortisseur de direction (35), comportant :
un châssis principal (65),
un arbre de direction (66),
un tuyau de tête (12) pour supporter de manière rotative l'arbre de direction (66) qui est installé à une extrémité avant du châssis principal (65),
un guidon (14) ; et
le dispositif amortisseur de direction (35) étant interposé entre ledit tuyau de tête (12) et ledit arbre de direction (66) pour restreindre un écart abrupt du guidon (14),
**caractérisé en ce que** le deux-roues comporte en outre
un compteur (36), et
un tableau de bord (61) installé dans une partie avant du tuyau de tête (12) pour supporter le compteur (36), et **en ce que**
ledit dispositif amortisseur de direction (35) est agencé devant ledit tuyau de tête (12) et en dessous dudit tableau de bord (61), et **en ce que**
ledit dispositif amortisseur de direction (35) est supporté par ledit tableau de bord (61).

2. Deux-roues selon la revendication 1,
**caractérisé en ce que**
ledit dispositif amortisseur de direction (35) est équipé d'un capteur d'angle de braquage (84) pour détecter un angle de braquage dudit guidon (14), et ce capteur d'angle de braquage (84) est agencé au niveau d'une partie de trou (90) agencée au niveau dudit tableau de bord (61).

3. Deux-roues selon la revendication 1 ou 2,
**caractérisé en ce que**
ledit dispositif amortisseur de direction (35) est installé sur ledit arbre de direction (66), et est couplé à un pont inférieur (62) pour supporter la fourche avant (13) via un mécanisme de biellettes (83).
